Europäisches Patentamt

European Patent Office

Office européen des brevets

(11) Numéro de publication: **0 262 113**
**A2**

## (12) DEMANDE DE BREVET EUROPEEN

(21) Numéro de dépôt: **87870134.1**

(22) Date de dépôt: **21.09.87**

(51) Int. Cl.⁴: **C 11 B 7/00**
**B 01 D 9/00**

(30) Priorité: **22.09.86 LU 86602**

(43) Date de publication de la demande:
**30.03.88 Bulletin 88/13**

(84) Etats contractants désignés: **BE DE FR GB**

(71) Demandeur: **S.A. Fractionnement TIRTIAUX**
**Chaussée de Charleroi, 601**
**B-6220 Fleurus (BE)**

(72) Inventeur: **Tirtiaux, Alain**
**Rue Jean Fontaine 6**
**B-5810 Temploux (BE)**

(74) Mandataire: **Schmitz, Yvon et al**
**Bureau Gevers S.A. rue de Livourne 7 bte 1**
**B-1050 Bruxelles (BE)**

(54) **Procédé et installation de fractionnement par cristallisation de matières grasses.**

㉗ Procédé de fractionnement par cristallisation de matières grasses consistant à amener celles-ci à une température qui permet de les pomper en continu à travers des canalisations dans lesquelles les opérations menant au fractionnement s'effectueront dans l'ordre suivant: chauffage à une température supérieure à la température de fusion et suffisante pour fondre les germes de cristallisation, refroidissement rapide jusqu'à une température proche de la température de fusion. refroidissement jusqu'à cristallisation complète, en maintenant sensiblement constant, entre les matières grasses et le moyen de refroidissement, un gradient de température déterminé et filtration des matières grasses cristallisées, et installation pour la mise en oeuvre de ce procédé.

EP 0 262 113 A2

## Description

### "Procédé et installation de fractionnement par cristallisation de matières grasses".

La présente invention est relative à un procédé de fractionnement par cristallisation de matières grasses, telles que huiles végétales ou animales, alimentaires ou non, acides gras, dérivés de ces acides.

Le fractionnement des huiles et des graisses alimentaires ou non, du type végétal ou animal, appelées plus généralement ci-après "matière grasse", consiste à séparer cette matière grasse en deux ou plusieurs fractions dont les caractéristiques physiques et chimiques diffèrent de la matière grasse initiale. Cette matière grasse initiale, si elle est refroidie trop rapidement ou sans contrôle suffisant, se solidifie presque complètement. Par contre, si le refroidissement est contrôlé de façon très précise, on observe une formation de cristaux au sein de la graisse ou de l'huile mère. Cette formation de cristaux peut être, selon le type de matière grasse, progressive ou assez subite. Les cristaux ainsi formés ont un effet sélectif sur la graisse ou l'huile mère qui permet d'éviter sa solidification. On constate dès lors que la graisse ou l'huile mère cristallisée peut être refroidie bien en dessous de sa température normale de solidification qui est en relation avec son point de fusion. C'est ainsi que pour l'huile de palme qui a un point de fusion de 36 à 38°C, il est possible d'en contrôler le refroidissement de manière à obtenir une huile chargée de cristaux, qui est encore parfaitement fluide et pompable à une température de 18°C.

Le brevet belge no 713.430 concerne un procédé de contrôle de refroidissement, qui permet de déclencher le processus de cristallisation de matière grasse susmentionné. Suivant ce brevet no 713.430, la matière grasse est pompée à l'état liquide dans une cuve pourvue d'une surface d'échange thermique et d'un système d'agitation. Dès que la cuve, appelée cristalliseur, est remplie, on la soumet éventuellement à un programme de chauffage afin de faire fondre totalement la matière grasse. Le programme de chauffage n'est pas nécessaire lorsque la matière grasse pompée est déjà parfaitement fondue. On enclenche, à partir de ce moment-là, le programme de refroidissement. Il consiste à maintenir la surface d'échange thermique du cristalliseur à un nombre de degrés C (°C) précis en-dessous de la température de la matière grasse. Cela revient à dire que la différence de température entre la matière grasse contenue dans le cristalliseur et le fluide d'échange thermique circulant dans la surface d'échange est maintenue constante tout au long de l'opération de refroidissment. La valeur de cette différence de température ( $\Delta t$ ) ou de ce gradient de température est choisie en fonction des caractéristiques du cristalliseur et de la nature de la matière grasse à cristalliser. A la fin du refroidissement, la matière grasse cristallisée est amenée le plus souvent par pompage, soit vers un filtre continu, comme décrit dans le brevet belge no 713.330, soit vers tout autre type de filtre permettant la séparation efficace des cristaux de matière grasse, appelée "stéarine", de la partie de matière grasse restée liquide à la température d'arrêt de refroidissement, appelée "oléine".

On a constaté que la stéarine et l'oléine ont des caractéristiques très différentes par rapport à la matière grasse initiale. Pour ne citer que l'une de ces caractéristiques, le point de fusion de la stéarine est sensiblement supérieur à celui de la matière grasse initiale, alors que l'oléine aura un point de fusion très inférieur. En ce qui concerne l'huile de palme, une stéarine aura un point de fusion de 48 à 55°C et une oléine correspondante un point de fusion de 16 à 25°C, alors que la matière grasse de départ a son point de fusion situé entre 36 et 38°C. Dans certains cas, il est avantageux de procéder à la recristallisation d'une oléine ou d'une stéarine afin d'obtenir ainsi, après filtration, des produits encore différents. L'opération consiste alors à charger un cristalliseur de cette oléine ou stéarine et de procéder à son refroidissement contrôlé tel que décrit ci-dessus, avec des paramètres de refroidissement adaptés.

Au fil des années, le procédé de cristallisation dont question ci-dessus a bien sûr été amélioré. L'évolution des techniques de contrôle électronique et les améliorations apportées à la réalisation de cristalliseurs plus performants ont permis de raccourcir le temps de séjour d'une charge de graisse ou d'huile dans un cristalliseur. Les meilleures connaissances de la composition des matières grasses, la multitude d'essais en installation pilote et les données mesurées en installations industrielles permettent, à l'heure actuelle, de palier un inconvénient majeur de ce procédé de cristallisation, c'est-à-dire son fonctionnement discontinu.

On prévoit, suivant l'invention, un procédé de cristallisation entièrement continu, pouvant être appliqué aux graisses et huiles végétales ou animales, alimentaires ou non, ainsi qu'aux acides gras et à leurs dérivés. L'expression "matière grasse" englobera donc également, dans le cadre de la présente invention, les acides gras et leurs dérivés. Le procédé de fractionnement de l'invention, tout en tenant compte des acquis technologiques du procédé discontinu connu, en garde les qualités essentielles mais permet en outre une compacité accrue de l'équipement et une récupération non négligeable d'énergie. Le procédé de l'invention pourra être utilisé seul ou en complément du procédé discontinu, selon les cas.

A cet effet, le procédé suivant l'invention consiste à amener la matière grasse à une température telle qu'elle soit suffisamment fluide pour pouvoir être pompée en continu à travers des canalisations dans lesquelles les opérations menant au fractionnement par cristallisation s'effectueront dans l'ordre suivant: chauffage de la matière grasse à une température supérieure à sa température de fusion et suffisante pour fondre les germes de cristallisation, refroidissement rapide de la matière grasse jusqu'à une température proche ou légèrement supérieure à sa température de fusion, refroidissement soit progressif soit par palier de la matière jusqu'à cristallisation complète et stabilisation des cristaux formés, en maintenant sensiblement constant, entre la matière grasse et le moyen de refroidissement, un gradient de température déterminé choisi en fonction de la matière grasse traitée ainsi qu'en fonction des températures atteintes en cours de refroidissement et filtration de la matière grasse cristallisée.

Avantageusement, on agite la matière grasse lors du refroidissement progressif ou par palier précité.

Suivant une forme de réalisation particulière du procédé de l'invention, on fait varier le degré d'agitation de la matière grasse en fonction de la matière grasse traitée et en fonction des températures atteintes en cours de refroidissement.

Suivant une forme de réalisation particulièrement préférée de l'invention, pour refroidir rapidement la matière grasse jusqu'à une température proche ou légèrement supérieure à sa température de fusion, on fait circuler à contre-courant cette matière grasse à refroidir et la matière grasse pompée en continu avant le chauffage de cette dernière de telle sorte que la matière à refroidir cède ses calories à la matière à chauffer.

Suivant une autre forme de réalisation particulièrement préférée de l'invention, après avoir fait circuler à contre-courant la matière grasse à refroidir et la matière grasse à chauffer, on fait circuler la matière grasse à refroidir, toujours à contre-courant et pour qu'il y ait échange de chaleur, avec au moins une partie de la matière grasse venant de la filtration, c'est-à-dire après refroidissement complet de la matière grasse.

L'invention a également pour objet une installation destinée à la mise en oeuvre du procédé précité, qui comprend une enceinte pourvue de moyens de chauffage et dans laquelle la matière grasse est amenée à une température telle qu'elle soit suffisamment fluide pour pouvoir être pompée en continu à travers des canalisations, une pompe, de préférence à débit variable, transférant la matière grasse à traiter vers le système de canalisations composé dans l'ordre d'au moins un premier échangeur de chaleur dans lequel la matière grasse est chauffée par un fluide circulant à contre-courant jusqu'à une température telle que les germes de cristallisation soient fondus, d'au moins un second échangeur de chaleur dans lequel la matière grasse chauffée est refroidie rapidement par au moins un fluide circulant à contre-courant jusqu'à une température proche ou légèrement supérieure à sa température de fusion, d'au moins un tube à double paroi, où se produit la cristallisation, dans lequel circule la matière grasse à refroidir et un fluide réfrigérant, des moyens étant prévus dans la partie de tube où circule la matière grasse pour créer une agitation dans cette dernière pour maintenir en suspension les germes de cristaux et les cristaux formés et pour favoriser l'échange de calories entre ladite matière et le fluide réfrigérant tandis que des moyens, tels que pompe, sont prévus pour faire circuler le fluide réfrigérant dans l'autre partie de tube, des moyens étant en outre agencés pour maintenir sensiblement constant un gradient de température, entre la matière grasse et le fluide réfrigérant circulant dans ce tube, déterminé, choisi en fonction de la matière grasse traitée, au moins un filtre étant enfin disposé en aval dudit tube à double paroi pour la filtration de la matière grasse cristallisée.

Suivant un mode de réalisation avantageux de l'invention, l'installation comprend, pour la cristallisation de la matière grasse, plusieurs tubes à double paroi disposés en série ou en parallèle et à travers lesquels circulent, soit à contre-courant, soit dans le même sens, la matière grasse à refroidir et le fluide réfrigérant, des moyens étant prévus, d'une part, pour faire circuler le fluide réfrigérant d'un tube à l'autre et, d'autre part, pour faire varier le gradient de température susdit d'un tube à l'autre ou d'une série de tubes à une autre série de tubes, les moyens précités créant l'agitation susdite dans les tubes étant agencés pour que cette agitation soit différente d'un tube à l'autre ou d'une série de tubes à une autre série de tubes.

Suivant un mode de réalisation particulièrement avantageux de l'invention, l'installation comprend, d'une part, un troisième échangeur de chaleur, situé en amont du premier échangeur susdit, dans lequel circule à contre-courant la matière grasse en provenance de l'enceinte susdite et se dirigeant vers le premier échangeur et la matière grasse en provenance de ce dernier, dans lequel la température de la matière grasse a été élevée de manière à fondre les germes de cristallisation et, d'autre part, un quatrième échangeur de chaleur, situé en aval du troisième échangeur, dans lequel circule à contre-courant la matière grasse déjà refroidie en provenant de ce troisième échangeur et se dirigeant vers le second échangeur et au moins une partie de la matière grasse filtrée, cette partie de matière grasse étant récupérée à la sortie de ce quatrième échangeur.

L'invention a également pour objet les produits obtenus grâce au procédé et à l'aide de l'installation décrits ci-dessus.

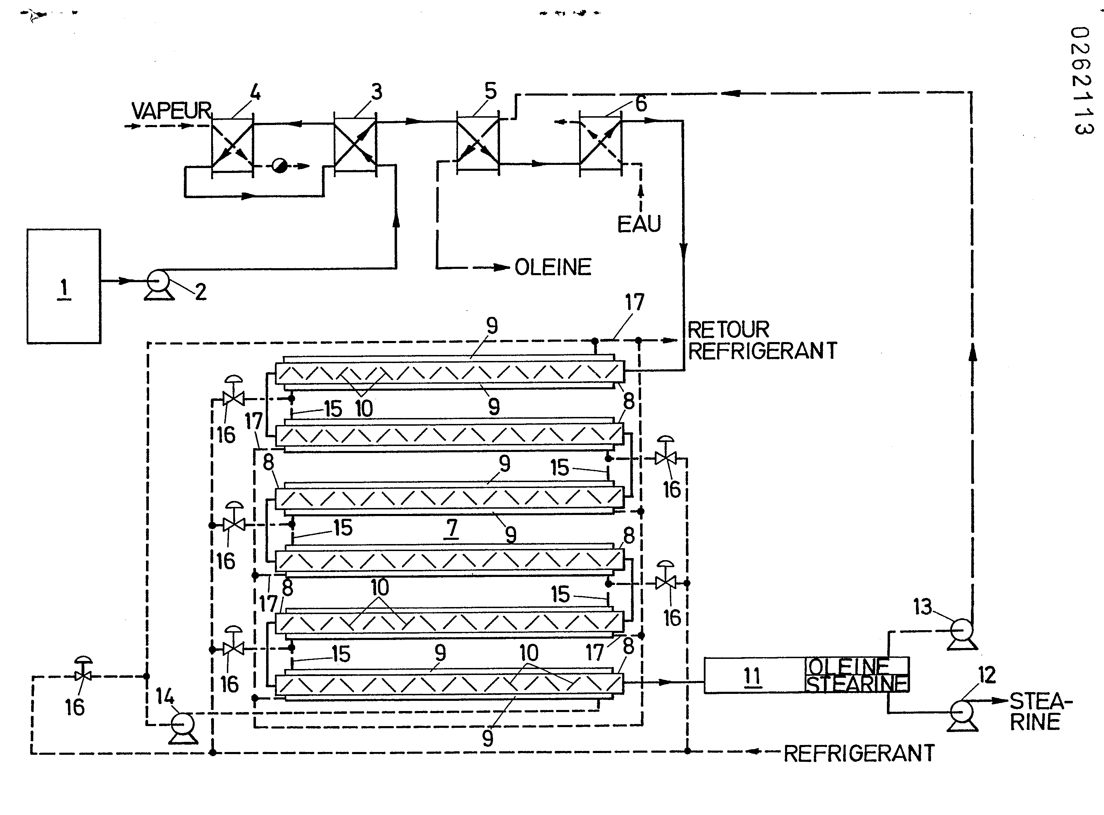

D'autres détails et particularités de l'invention ressortiront de la description ci-après, donnée à titre d'exemple non limitatif et en se référant au dessin annexé, dont la figure unique représente schématiquement une installation industrielle de fractionnement par cristallisation de matières grasses suivant l'invention.

Comme il résulte déjà de ce qui précède, la présente invention propose un procédé de fractionnement par cristallisation en continu de matières grasses, telles qu'huiles et graisses végétales ou animales, alimentaires ou non, acides gras, dérivés de ces acides, dont les avantages prépondérents par rapport au procédé discontinu appliqué jusqu'à présent, sont la possibilité d'utiliser un équipement compact par rapport aux installations mises en oeuvre pour le procédé discontinu et la récupération importante d'énergie. La description qui suit se rapporte à un procédé de fractionnement fronctionnant uniquement en continu. Il est bien entendu, ainsi qu'on l'a déjà précisé précédemment, qu'on pourrait également envisager l'utilisation d'un procédé combinant avantageusement le procédé continu susdit et le procédé discontinu usuel. Un exemple caractéristique d'application du procédé de fractionnement par cristallisation de matière grasse de l'invention, est le traitement de l'huile de palme. A cet égard, on donnera ci-après quelques données se rapportant plus spécifiquement à l'huile de palme, bien que, ainsi qu'on l'a déjà précisé précédemment à plusieurs reprises, le procédé de l'invention est parfaitement applicable à d'autres matières grasses, grâce à un choix différent de paramètres. La matière grasse est tout d'abord amenée à une température telle qu'elle soit suffisamment fluide pour pouvoir être pompée en continu au travers des canalisations dans lesquelles les opérations menant au fractionnement par cristallisation s'effectueront. C'est ainsi que la matière grasse est tout d'abord chauffée à une température supérieure à sa température de fusion et suffisante pour fondre les germes de cristallisation et est ensuite rapidement refroidie jusqu'à une température proche ou légèrement supérieure à sa température de fusion. La matière grasse est ensuite refroidie soit progressivement soit par palier, jusqu'à sa cristallisation complète et stabilisation des cristaux formés, en maintenant sensiblement constant, entre elle et le moyen de refroidissement, un gradient de température déterminé choisi en fonction de sa nature ainsi qu'en fonction des températures atteintes en cours de refroidissement, et est finalement filtrée. Pour refroidir rapidement la matière grasse jusqu'à une température proche ou légèrement supérieure à sa température de fusion, on peut faire circuler à contre-courant cette matière grasse à refroidir et la matière grasse pompée en continu avant le chauffage de cette dernière de telle sorte que la matière à refroidir cède ses calories à la matière à chauffer. En outre, pour obtenir ce refroidissement rapide, après avoir fait circuler à contre-courant la matière grasse à refroidir et la matière grasse à chauffer, on peut également faire circuler la matière grasse à refroidir, toujours à contre-courant, et pour qu'il y ait échange de chaleur, avec au moins une partie de la matière grasse venant de la filtration, c'est-à-dire après refroidissement complet de la matière grasse.

C'est ainsi que dans le cas plus spécifique de l'huile de palme, celle-ci sera d'abord préalablement chauffée à une température de 80°C car en dessous de cette température, certains triglycérides trisaturés peuvent subsister à l'état de germes de cristallisation. Le chauffage est effectué avantageusement dans un échangeur de chaleur tubulaire, à plaques, à spirale, platulaire ou autre. Immédiatement après ce chauffage, l'huile de palme est rapidement refroidie dans un même type d'échangeur de chaleur à une température d'environ 40°C, c'est-à-dire à une température de 0 à 8°C au-dessus de sa température de fusion. Comme on vient de le préciser, cette opération de refroidissement, tout comme l'opération de chauffage, peut se faire avec une récupération d'énergie, d'une part, par un échangeur de chaleur entre les flux d'huile entrant dans l'installation et d'huile après chauffage à 80°C et, d'autre part, par un autre échangeur de chaleur refroidissant l'huile à nouveau grâce à un flux à contre-courant d'oléine à 20°C venant de la filtration.

On notera également que, lors du refroidissement progressif ou par palier précité, certaines opérations, telles que l'agitation de la matière grasse et la variation du degré d'agitation de celle-ci en fonction de la matière grasse traitée et en fonction des températures atteintes en cours de refroidissement, peuvent influencer favorablement le processus de cristallisation.

Comme on peut le voir d'après l'installation illustrée schématiquement, la matière grasse à traiter, stockée dans une enceinte 1 pourvue de moyens de chauffage appropriés, est pompée, par l'intermédiaire d'une pompe 2, au travers d'une série d'échangeurs de chaleur 3, 4, 5 et 6. Cette combinaison d'échange de chaleur montre un exemple de récupération d'énergie grâce auquel l'huile chargée est chauffée dans l'échangeur 3 par le même flux revenant de l'échangeur 4, où l'huile est chauffée par de la vapeur. Le schéma prévoit ensuite un refroidissement supplémentaire de l'huile dans l'éohangeur 5 grâce à un contre-courant d'oléine froide venant de la filtration. L'échangeur 6 ajuste ensuite la température de l'huile à une valeur précise grâce à un contre-courant d'eau de refroidissement. A ce moment, l'huile pénètre dans le module de cristallisation 7, représenté schématiquement par un ensemble de six tubes à double paroi 8. En réalité, on peut considérer que chaque tube représenté constitue un groupe de tubes dont le diamètre et la longueur sont fonction de la capacité de l'installation, du type de matière grasse traitée et de la vitesse d'écoulement dans chaque tube. Les six tubes à double paroi 8, disposés en série, permettent en fait d'effectuer le refroidissement de la matière grasse en six étapes, le refroidissement contrôlé de la matière se faisant dans le premier tube, le début de la cristallisation dans le second tube, la cristallisation dans le troisième tube, la stabilisation des cristaux dans le quatrième tube, le refroidissement final dans le cinquième tube et la stabilisation avant filtration dans le sixième tube. Chaque tube est pourvu intérieurement d'une série de déflecteurs 10. La matière grasse s'écoule dès lors d'un tube (ou groupe de tubes) à l'autre de façon continue pour arriver au filtre 11, où sont séparés les cristaux (stéarine), pompés à l'état fondu par la pompe 12, de la partie fluide (oléine) pompée par la pompe 13 au travers de l'échangeur de chaleur 5. Pour contrôler la température des tubes 8, du fluide réfrigérant est en fait pompé par la pompe 14 dans l'espace 9 compris entre les deux parois de chacun des tubes et à contre-courant par rapport au flux d'huile. Des canalisations 15 sont prévues pour faire circuler le fluide réfrigérant d'un tube 8 à l'autre. D'autre part, du fluide froid est injecté dans chaque espace 9 des tubes 8 par une vanne de régulation 16 pour faire varier le gradient de température entre le fluide de refroidissement et l'huile d'un tube 8 à l'autre (ou bien d'une série de tubes à une autre série de tubes). Cette correction ou modification du gradient de température est contrôlée automatiquement par plusieurs mesures de température faites au sein de l'huile circulant des les tubes et à un ou plusieurs endroits de leur espace 9. Des canalisations 17 sont également prévues pour évacuer l'excès de réfrigérant vers une unité de refroidissement dans laquelle le réfrigérant est porté à nouveau à une température froide adéquate à sa réutilisation.

Suivant l'invention, le nombre, la longueur et le diamètre des tubes 8 sont déterminés par le calcul, principalement en fonction de la nature de la matière grasse à cristalliser, de la capacité de cristallisation désirée et de la vitesse d'écoulement dans chaque tube 8. On notera que l'on n'exclut pas la mise en parallèle de certains tubes, ni une variation en longueur ou en diamètre de certains tubes par rapport à d'autres. Les déflecteurs statiques 10 prévus dans la partie de tube où circule la matière grasse, servent en fait à créer une agitation dans cette dernière pour maintenir en suspension les germes de cristaux et les cristaux formés et pour favoriser l'échange de calories entre la matière grasse et le fluide réfrigérant circulant dans l'espace 9 de chaque tube. La forme de ces déflecteurs 10 sera déterminée par le calcul en fonction de l'échange thermique voulu et pourra varier d'un tube 8 à l'autre (ou d'une série de tubes à l'autre série de tubes). Le circuit de refroidissement des tubes est de préférence réalisé en raccordant en série les espaces 9 de chaque tube de manière à ce que le fluide réfrigérant circule dans le sens opposé à celui de l'huile. On pourrait toutefois concevoir le raccordement en parallèle de certains de ces espaces 9, de même que leur raccordement pour permettre une circulation du fluide réfrigérant dans le sens du flux d'huile. On pourrait également concevoir l'utilisation d'un gaz pour refroidir une partie des tubes et d'un liquide pour refroidir les tubes restants.

Le contrôle de la température du fluide de réfrigération se fera individuellement sur chaque tube ou chaque groupe de tubes par le maintien d'un gradient de température constant entre la température du fluide de réfrigération, soit à l'entrée, soit à la sortie de l'espace 9 de chaque tube ou groupe de tubes, et la température de la matière grasse à un ou plusieurs endroits choisis du tube ou du groupe de tubes. Les endroits de contrôle seront de préférence choisis judicieusement par l'expérience et le calcul afin que le contrôle d'un tube ou groupe de tubes permette d'obtenir un gradient de température (Δt) le plus constant possible sur toute la longueur du ou des tubes. Ce gradient de température sera en outre corrigé autant de fois qu'il le faudra au passage du flux d'huile d'un tube ou d'un groupe de tubes à un autre tube ou groupe de tubes.

Il doit être entendu que la présente invention n'est en aucune façon limitée aux formes de réalisation décrites ci-dessus et que bien des modifications peuvent y être apportées sans sortir du cadre du présent brevet.

## Revendications

1. Procédé de fractionnement par cristallisation de matières grasses, telles que huiles et graisses végétales ou animales, alimentaires ou non, acides gras, dérivés de ces acides, caractérisé en ce qu'il consiste à amener la matière grasse à une température telle qu'elle soit suffisamment fluide pour pouvoir être pompée en continu à travers des canalisations dans lesquelles les opérations menant au fractionnement par cristallisation s'effectueront dans l'ordre suivant : chauffage de la matière grasse à une température supérieure à sa température de fusion et suffisante pour fondre les germes de cristallisation, refroidissement rapide de la matière grasse jusqu'à une température proche ou légèrement supérieure à sa température de fusion, refroidissement soit progressif soit par palier de la matière jusqu'à cristallisation complète et stabilisation des cristaux formés, en maintenant sensiblement constant, entre la matière grasse et le moyen de refroidissement, un gradient de température déterminé choisi en fonction de la matière grasse traitée ainsi qu'en fonction des températures atteintes en cours de refroidissement et filtration de la matière grasse cristallisée.

2. Procédé suivant la revendication 1, caractérisé en ce que, lors du refroidissement progressif ou par palier précité, on agite la matière grasse.

3. Procédé suivant la revendication 2, caractérisé en ce qu'on fait varier le degré d'agitation de la matière grasse en fonction de la matière grasse traitée et en fonction des températures atteintes en cours de refroidissement.

4. Procédé suivant l'une quelconque des revendications 1 à 3, caractérisé en ce que, pour refroidir rapidement la matière grasse jusqu'à une température proche ou légèrement supérieure à sa température de fusion, on fait circuler à contre-courant cette matière grasse à refroidir et la matière grasse pompée en continu avant le chauffage de cette dernière de telle sorte que la matière à refroidir cède ses calories à la matière à chauffer.

5. Procédé suivant la revendication 4, caractérisé en ce qu'après avoir fait circuler à contre-courant la matière grasse à refroidir et la matière grasse à chauffer, on fait circuler la matière grasse à refroidir, toujours à contre-courant et pour qu'il y ait échange de chaleur, avec au moins une partie de la matière grasse venant de la filtration c'est-à-dire après refroidissement complet de la matière grasse.

6. Procédé suivant l'une quelconque des revendications 1 à 5, caractérisé en ce qu'il est combiné à un procédé de fractionnement par cristallisation de matières grasses, discontinu.

7. Installation pour la mise en oeuvre du procédé suivant l'une quelconque des revendications 1 à 6, caractérisée en ce qu'elle comprend une enceinte (1) pourvue de moyens de chauffage et dans laquelle la matière grasse à traiter est amenée à une température telle qu'elle soit suffisamment fluide pour pouvoir être pompée en continu à travers des canalisations, une pompe (2) transférant la matière grasse à traiter vers le système de canalisations composé dans l'ordre d'au moins un premier échangeur de chaleur (4) dans lequel la matière grasse est chauffée par un fluide circulant à contre-courant jusqu'à une température telle que les germes de cristallisation soient fondus, d'au moins un second échangeur de chaleur (6) dans lequel la matière grasse chauffée est refroidie rapidement par au moins un fluide circulant à contre-courant jusqu'à une température proche ou légèrement supérieure à sa température de fusion, d'au moins du tube à double paroi (8), où se produit la cristallisation, dans lequel circulent la matière grasse à refroidir et un fluide réfrigérant, des moyens (10) étant prévus dans la partie de tube (8) où circule la matière grasse pour créer une agitation dans cette dernière afin de maintenir en suspension les germes de cristaux et les cristaux formés et pour favoriser l'échange de calories entre ladite matière et le fluide réfrigérant tandis que des moyens, tels que pompe (14), sont prévus pour faire circuler le fluide réfrigérant dans l'autre partie (9) de tube (8), des moyens (16) étant en outre agencés pour maintenir sensiblement constant un gradient de température, entre la matière grasse et le fluide réfrigérant circulant dans ce tube (8), déterminé, choisi en fonction de la matière grasse traitée, au moins un filtre (11) étant enfin disposé en aval dudit tube à double paroi pour la filtration de la matière grasse cristallisée.

8. Installation suivant la revendication 7, caractérisée en ce qu'elle comprend, pour la cristallisation de la matière grasse, plusieurs tubes (8) à double paroi disposés en série ou en parallèle et à travers lesquels circulent, soit à contre-courant, soit dans le même sens, la matière grasse à refroidir et le fluide réfrigérant, des moyens (15, 16) étant prévus, d'une part, pour faire circuler le fluide réfrigérant d'un tube à l'autre et, d'autre part, pour faire varier le gradient de température susdit d'un tube à l'autre ou d'une série de tubes à une autre série de tubes, les moyens (10) précités créant l'agitation susdite dans les tubes (8) étant agencés pour que cette agitation soit différente d'un tube à l'autre ou d'une série de tubes à une autre série de tubes.

9. Installation suivant l'une ou l'autre des revendications 7 et 8, caractérisée en ce qu'elle comprend, d'une part, un troisième échangeur de chaleur (3), situé en amont du premier échangeur (4) susdit, dans lequel circule à contre-courant la matière grasse en provenance de l'enceinte (1) et se dirigeant vers le premier échangeur (4) et la matière grasse en provenance de ce dernier, dans lequel la température de la matière grasse a été élevée de manière à fondre les germes de cristallisation et, d'autre part, un quatrième échangeur de chaleur (6), situé en aval du troisième échangeur (3), dans lequel circule à contre-courant la matière grasse déjà refroidie en provenance de ce troisième échangeur (3) et se dirigeant vers le second échangeur (6) et au moins une partie de la matière grasse filtrée, cette partie de matière grasse étant récupérée à la sortie de ce quatrième échangeur (5).

10. Produits obtenus grâce au procédé suivant l'une quelconque des revendications 1 à 6 et à l'aide de l'installation suivant l'une quelconque des revendications 7 à 9.

0262113